# EUROPEAN PATENT SPECIFICATION

(11) **EP 0 654 127 B1**
(45) Date of publication and mention of the grant of the patent: **17.09.1997**
(21) Application number: 94913232.8
(22) Date of filing: 13.04.1994
(51) Int. Cl.: F16D 25/12, F16D 13/72

(54) **ARRANGEMENT FOR A CLUTCH IN A VEHICLE TRANSMISSION**
KUPPLUNGSANORDNUNG IN EINEM FAHRZEUGGETRIEBE
AGENCEMENT DESTINE A UN EMBRAYAGE DANS UN SYSTEME DE TRANSMISSION D'UN VEHICULE

(30) Priority: 13.04.1993 SE 9301204
(43) Date of publication of application: 24.05.1995
(73) Proprietor: SCANIA CV AKTIEBOLAG, S-151 87 Södertälje (SE)
(72) Inventor: JOHANSSON, Jan, S-141 47 Huddinge (SE)
(74) Representative: Waldebäck, Hans Olov
(86) International application number: SE9400322
(87) International publication number: WO9424450

(56) References cited:
- EP-A- 0 421 141
- US-A- 4 557 363
- US-A- 4 640 401
- US-A- 4 753 332

## Description

The present invention refers to an arrangement for a clutch according to the preamble to the accompanying claim 1.

### State of the art

Clutches between a vehicle's engine and its gearbox usually take the form of friction clutches. These include as one half of the clutch one or more discs which are connected to the vehicle's gearbox and which cooperate with the other half of the clutch, which usually takes the form of the engine flywheel and a pressure plate attached thereto and possibly further discs fastened thereto.

Clutch operation is by means of a disengaging mechanism which includes a clutch pedal operable by the driver. During clutch operation a difference in speed occurs between the parts of the clutch, resulting in their sliding with respect to one another and generating friction heat. Particularly in clutches which transmit high torque, e.g. clutches in heavy duty vehicles such as trucks and buses, this friction heat may be considerable. With a view both to preventing the occurrence of locally high disc temperature rises and to facilitating the removal of such heat, it is known for the clutch to take the form of a wet clutch. In a wet clutch the clutch parts and discs are more or less immersed in oil.

One problem with wet clutches is that the rotation of the clutch halves in the oil involves clutch slip losses which reduce driveline efficiency. A further disadvantage of the slip losses is that they contribute to rising oil temperature, thereby reducing the temperature range which can be used for further temperature rise in connection with clutch movements.

Document US-A-4 753 332 discloses an arrangement for a clutch in a vehicle, wherein a clutch housing is connected to an accumulator. During clutch operation the clutch housing is filled with oil from the accumulator, and after clutch operation oil is evacuated from the clutch housing to a separate oil sump. After clutch operation the accumulator will be filled with oil from the oil sump with the aid of a spring acted piston.

### Objects of the invention

The object of the invention is to eliminate or at least reduce the aforesaid disadvantages of known wet clutches. The invention is therefore intended to reduce clutch slip losses due to the clutch rotating in oil and to reduce the oil temperature rise caused by slip losses.

The invention has the further object of providing an otherwise optimum clutch design with good facilities for removing friction heat from the discs and creating advantageous operating conditions.

The arrangement is also intended to be easy to manufacture and fit and, where applicable, to be easy to apply to already existing clutches.

### Brief description of the invention

According to the invention, the object of the invention is achieved by clutch design incorporating the features indicated in the characterising portion of claim 1. The accompanying subclaims indicate advantageous embodiments of the invention.

Fitting an accumulator makes it possible for the oil in the clutch housing to be evacuated for the period when it is not needed, i.e. in normal running when the clutch merely transmits the drive power. The oil level in the clutch housing can thereby be reduced so that the clutch rotates in oil either not at all or only insignificantly. This means that slip losses can be eliminated or reduced, as also the oil temperature rise caused by them.

The accumulator also makes it possible, during clutch operation, for oil to be directed to the clutch housing so as, in a manner known per se for a wet clutch, to remove friction heat and prevent local disc temperature rise. The clutch housing only being filled with oil for a short time renders the negative characteristics of a wet clutch hardly perceptible.

It is advantageous for the accumulator to be controlled by a pneumatic cylinder which is supplied with compressed air in coordination with the actuation of the clutch. A pneumatic control system has the advantage that the ordinary compressed air system normally carried by heavy duty vehicles for their brake systems can be used to supply the necessary compressed air.

As many heavy duty vehicles today have clutch servos which use compressed air from the vehicle's brake system, the arrangement according to the invention requires only minor modifications to existing components. This makes it easy to apply the invention to existing vehicles as well.

Where applicable, it is advantageous for clutch actuation to be detected by means of a sensor associated with the clutch pedal.

Further advantages and characteristics which distinguish the invention emerge from the following description example of an advantageous embodiment.

### Drawing

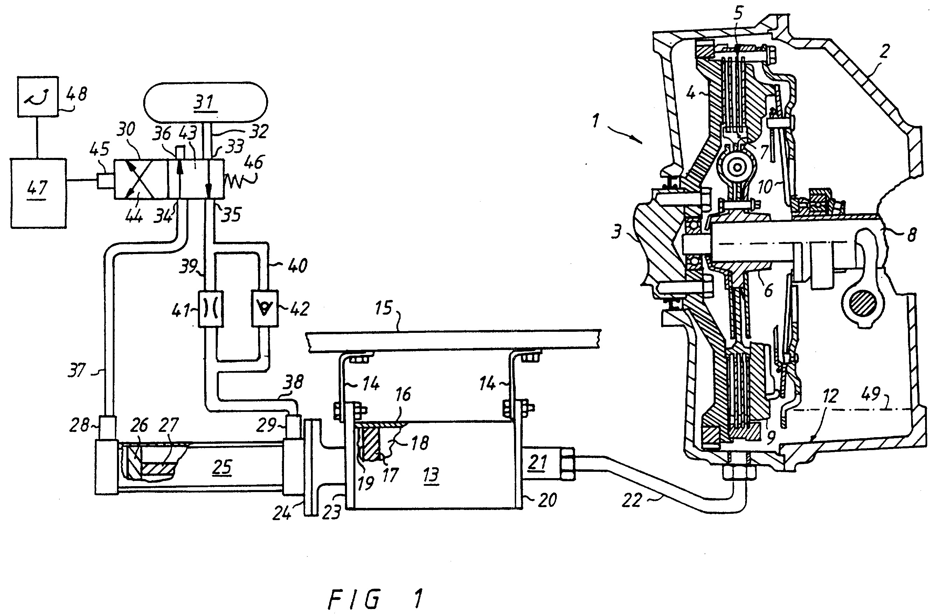

The description refers to the accompanying drawing, in which Fig. 1 illustrates an arrangement according to the invention showing partly schematically and partly in detail the layout of the various components.

### Description of embodiment examples

The accompanying Fig. 1 illustrates an arrangement for a clutch forming part of a transmission for a heavy duty vehicle such as a truck or a bus.

The transmission includes a clutch 1 intended to transmit drive power from an engine to a gearbox and to make it possible to interrupt drive power during gear changing or other similar requirements. The clutch 1 is accommodated in a clutch housing 2 fitted to the rear end of the engine whereby the engine crankshaft 3 is connected to the engine flywheel 4. In this case a number of discs 5 are connected to, for joint rotation with, the flywheel 4 and form together with the flywheel 4 and a pressure plate 9 one half of the clutch 1. The other half of the clutch 1 is connected to an output shaft 8 and consists of a driving disc 6 to which are attached a number of further discs 7. These discs 7 are disposed alternately between the discs 5 connected to the flywheel 4. The pressure plate 9 is disposed in a per se conventional manner so that a clutch spring 10 presses it against the flywheel 4 in order thereby to press the discs 5, 7 against one another so as to create a drive power connection between the two halves of the clutch.

The clutch 1 is intended to be operated by a clutch pedal which acts on the clutch mechanically, hydraulically or in another known manner. As the clutch 1 per se and the components required for operating it are well known, the description of this is confined to what is necessary for understanding the present invention.

The lower portion of the clutch housing 2 consists of an oil sump 12 which under certain operating conditions is intended to contain oil in which the clutch discs 5, 7 are more or less immersed. During such operating conditions the clutch is functionally a wet clutch.

An accumulator 13 is fitted to accommodate at least a substantial proportion of the oil during other operating conditions during which the clutch 1 is functionally a dry clutch. The oil thus moves between the clutch housing oil sump 12 and the accumulator 13 as described in more detail below.

The accumulator 13 is fitted by means of two brackets 14 to one of the vehicle frame members 15 in the vicinity of the clutch housing 2.

The accumulator 13 consists of a cylinder 16 with a piston 17 which delineates two spaces 18, 19 in the cylinder 16. One endwall 20 of the accumulator 13 is provided with a connection 21 for one end of a hydraulic line 22 which has its other end connected to the underside of the clutch housing 2. The one space 18 in the cylinder 16 (in the diagram the right space 18) thus communicates via the hydraulic line 22 with the clutch housing oil sump 12. The other space 19 in the cylinder 16 is vented via a duct (not illustrated) between the space 19 and the surrounding atmosphere.

The other endwall 23 of the accumulator 13 (in the diagram the left endwall) is provided with a flange 24 on which an air cylinder 25 is mounted. The air cylinder 25 contains an air piston 26 which is connected directly via a piston rod 27 to the piston 17 in the accumulator 13. The air cylinder 25 includes two connections 28, 29 for supply of compressed air for moving the air piston 26 to either of its two end positions.
The two connections 28, 29 of the air cylinder 25 are connected to a solenoid valve 30 which makes it possible for the connections 28, 29 to be connected to a compressed air source 31. In this case the compressed air source 31 forms part of the vehicle's brake system. The diagram depicts the compressed air source as one of the brake system's compressed air tanks 31, which is connected by a feed line 32 to a first valve port 33 of the solenoid valve 30. A second valve port 34 is connected directly by a first line 37 to one connection 28 of the air cylinder 25. A third valve port 35 is connected by a second line 38 to the other connection 29 of the air cylinder 25. This second line 38 includes two mutually parallel branch lines 39, 40. The first branch line 39 includes a constriction 41 which reduces flow in both directions. The second branch line 40 includes a check valve 42 so directed as to cut off the compressed air supply to the cylinder 25 from the compressed air source 31 while allowing substantially free flow in the opposite direction. The solenoid valve 30 further includes a fourth valve port 36 which is entirely open to the atmosphere to allow venting of the compressed air cylinder 25. The solenoid valve 30 can assume either a position of rest 43 or an activated position 44. In the position of rest 43 the first port 33 is connected to the third port 35, and the second port 34 is connected to the fourth port 36. In the activated position 44, the first port 33 is connected to the second port 34, and the third port 35 is connected to the fourth port 36. The solenoid valve 30 is brought into its activated position 44 by means of an electric coil 45 and returns to its position of rest 43 under the action of a return spring 46. The solenoid valve 30 is connected, for its operation, to an electrical control unit 47 to which a clutch pedal contact 48 is connected for detecting the driver's actuation of the clutch pedal. It is advantageous for the clutch pedal contact 48 to take the form of a conventional position sensor which creates contact when the clutch pedal is depressed to a certain limit position and gives a signal for as long as the pedal is depressed further than that limit position.

The functioning of the arrangement described is as follows. The arrangement is supposed initially to be in a position of rest corresponding to continuous driving with drive power transmitted between the engine and the gearbox via the clutch 1. The solenoid valve 30 is in its position of rest 43 and compressed air from the compressed air source 31 acts on the air piston 26 of the air cylinder to make it assume its left end position, which also means that the accumulator piston 17 is in its left end position.
The space 18 to the right of the accumulator piston 17 is full of oil and the accumulator 13 is therefore in an oil-filled state. The clutch housing oil sump 12 is substantially empty of oil or contains only a small quantity of oil. Accordingly the clutch discs 5, 7 can rotate in the clutch housing 2 with reduced or no slip losses. When the driver initiates a gear change by depressing the clutch pedal, the pedal contact 48 detects this and conveys to the control unit 47 a signal which indicates clutch actuation. The control unit 47 thereupon conveys an output signal to the solenoid valve 30 to assume its activated position 44. Compressed air from the compressed air source 31 will now reach the left space of the compressed air cylinder 25, while the latter's right space is vented, mainly via the second branch line 40 incorporating the check valve 42. The air piston 26 acts via the piston rod 27 directly on the piston 17 in the accumulator 13 so that substantially all the oil in the right space 18 of the accumulator enters the clutch housing 2 via the hydraulic line 22 and fills the oil sump 12 to a certain level. In the diagram this oil level is indicated by a chain-dotted line 49.
As the compressed air supply takes place via the first line 37, the supply will be relatively rapid.
It is advantageous for the system to be dimensioned so that the time which the driver takes to depress the clutch pedal corresponds to the time it takes to transfer the oil from the accumulator 13 to the oil sump 12.
The control unit 47 has in this manner at least indirectly made the accumulator 13 assume an evacuated state when the accumulator piston 17 is in its right end position.

The driver depressing the clutch pedal also results, in a per se conventional manner, in disengagement of the clutch 1 when the latter's discs 5, 7 are released from one another and allowed to rotate relative to one another. The heat generated by the relative rotation of the discs 5, 7 at the time of release can be absorbed by the oil, which also prevents the occurrence of any locally high temperature rise. During the period when the oil is in the clutch housing 2, the clutch 1 will have the benefit of the advantages which arise from the clutch 1 being a wet clutch during that period.

When the driver has executed the gear change and the clutch pedal slides back up, the pedal contact 48 reaches the limit position at which it no longer produces any signal to the effect that the pedal is actuated. The solenoid valve 30 will then no longer receive any activating signal from the control unit 47 and will revert to its position of rest 43.
At the same time, the space to the left of the air piston 26 will be vented. The space to the right of the air piston 26 will be fed with compressed air via the second branch line 39, in which the supply passes through the constriction 41 which delays the pressure drop in the right space of the air cylinder.

The accumulator piston 17 will therefore move relatively slowly to its left end position, with simultaneous suction of oil from the clutch housing 2 into the accumulator 13. It is advantageous for the delay due to the constriction 41 to be dimensioned so that oil is not sucked into the accumulator 13 before clutch engagement is complete and the discs 5, 7 again rotate together without relative sliding. This means that the friction heat generated during the sliding together of the discs 5, 7 can also be absorbed by the oil.

When clutch engagement is complete and the oil has returned to the accumulator 13, the clutch and its discs 5, 7 can rotate substantially freely without being hindered by any oil in the clutch housing 2. The clutch 1 thus has the benefit of the advantages afforded by a dry clutch.

The arrangement described thus has the advantages afforded both by a wet clutch and by a dry clutch, with simultaneous avoidance of their respective disadvantages.

Within the scope of the accompanying claims, the invention may be modified and embodied otherwise than as exemplified in the description. It is not necessary for all the oil to be evacuated from the clutch housing, as a certain small quantity can always remain without major disadvantage. The invention makes it possible, provided that the volume of the accumulator 13 is suitably dimensioned, to employ during gear changing a higher oil level in the clutch housing 2 than may be regarded as normal for a conventional wet clutch, in order to have the benefit of the advantages of a large quantity of oil. Even if this causes great slip losses during gear changing, the period of time during which this takes place is so short as to be negligible in practice.

In the example described, a separate air cylinder 25 is used to operate the accumulator piston 17, which is an advantageous solution if it is desired to avoid drawing too heavily on an existing compressed air system. An alternative solution is to allow the compressed air to act directly on the accumulator piston 17, thereby eliminating the whole compressed air cylinder 25. In such a case it is advantageous to use a return spring for making the accumulator piston 17 move back to the left end position.

The arrangement exemplified includes a driver-operated clutch pedal, the position of which is detected directly in order to indicate actuation of the clutch. In other embodiments in which gear changing and clutch operation take place more or less automatically and there may possibly be no clutch pedal, a second sensor may be used to indicate in a similar manner an imminent clutch movement. In such a modified embodiment, it is advantageous for the control unit 47 to be integrated with a control unit for the whole transmission and/or a control unit for engine management.

In one simple embodiment the control unit 47 may be entirely replaced by a line connection between the sensor 48 and the solenoid valve 30. In this case, the sensor is connected, for example, to a voltage source which at the time of clutch operation is connected via the sensor to, and directly acts on, the coil 45 of the solenoid valve.

Instead of using compressed air as the operating medium it is of course possible to use other pressure media or other types of operating devices. Pressure medium also includes vacuum.

## Claims

1. Arrangement for a clutch in a vehicle transmission whereby the clutch (1) is accommodated in a clutch housing (2) which contains an oil sump (12) which itself at least partly accommodates the clutch (1), and wherin the oil sump (12) is connected to an accumulator (13) which takes the form of a cylinder (16) accommodating a movable piston (17) which delineates in the cylinder (16) a space (18) which can assume an oil-filled state in which the accumulator (13) contains oil, and which can assume an evacuated state in which the oil previously contained has been fed to the oil sump (12), and in that a device (48) for detecting clutch operation is connected to devices (25, 30, 47) which are directly or indirectly organised to make the accumulator (13) assume its evacuated state during clutch operation and its oil-filled state after clutch operation
**characterised** in that
the space (18) in the accumulator (13) directly communicates via a hydraulic line (22) with the clutch housing oil sump (12) through which line (22) oil in the clutch housing (2) can be directly evacuated into the accumulator (13) after clutch operation and through which line (22) oil can be directly transferred to the clutch housing (2) during clutch operation, and in that the piston (17) of the accumulator (13) is connected to a pressure medium controlled cylinder (25) which can act upon the piston (17) of the accumulator to make it assume its end position corresponding to the respective state of the accumulator (13).

2. Arrangement according to claim 1, **characterised** in that the devices for directly or indirectly making the accumulator (13) assume its respective states include a control unit (47), that the device for detecting clutch operation takes the form of a sensor (48) which is connected to the control unit (47), and
that the pressure medium controlled cylinder (25) is connected to a pressure medium source (31) via a solenoid valve (30) which is controlled by the control unit (47).

3. Arrangement according to claim 1 or 2, **characterised** in that the supply of pressure medium to the pressure medium controlled cylinder (25) takes place via a pipe (39), which contains a constriction (41), when the accumulator (13) is to be brought to its oil-filled state.

4. Arrangement according to claim 3, **characterised** in that removal of pressure medium from the pressure medium controlled cylinder (25) takes place via a pipe (40), which contains a check valve (42), when the accumulator (13) is to be brought to its evacuated state, and that the pipe (40) containing the check valve (42), and the pipe (39) containing the constriction (41), are disposed mutually parallel in a pipe (38) between the solenoid valve (30) and the pressure medium controlled cylinder (25).

5. Arrangement according to any one of claims 1-4, **characterised** in that the pressure medium controlled cylinder takes the form of a compressed air cylinder (25) and that the pressure medium takes the form of compressed air.

## Patentansprüche

1. Anordnung für eine Kupplung in einem Fahrzeuggetriebe, bei der die Kupplung (1) in einem Kupplungsgehäuse (2) aufgenommen ist, das einen Ölsumpf (12) enthält, der seinerseits die Kupplung (1) zumindest teilweise aufnimmt, wobei der Ölsumpf (12) mit einem Sammler (13) in Gestalt eines Zylinders (16) verbunden ist, welcher einen beweglichen Kolben (17) aufnimmt, der in dem Zylinder (16) einen Raum (18) begrenzt, der einen ölgefüllten Zustand einnehmen kann, in dem der Sammler (13) Öl enthält, und der einen entleerten Zustand einnehmen kann, in dem das zuvor enthaltene Öl dem Ölsumpf (12) zugeführt worden ist, und wobei eine Einrichtung (48) zum Erfassen eines Kupplungsvorganges mit Einrichtungen (25, 30, 47) verbunden ist, die direkt oder indirekt so organisiert sind, daß der Sammler (13) während eines Kupplungsvorganges seinen entleerten Zustand einnimmt und nach einem Kupplungsvorgang seinen ölgefüllten Zustand, dadurch gekennzeichnet, daß der Raum (18) in dem Sammler (13) über eine Hydraulikleitung (22) direkt mit dem Ölsumpf (12) im Kupplungsgehäuse kommuniziert, durch die Öl in dem Kupplungsgehäuse (2) nach einem Kupplungsvorgang direkt in den Sammler (13) entleert werden kann und durch die Öl während eines Kupplungsvorganges direkt zum Kupplungsgehäuse (2) geführt werden kann, und daß der Kolben (17) des Sammlers (13) mit einem druckmittelgesteuerten Zylinder (25) verbunden ist, der auf den Kolben (17) des Sammlers einwirken kann, um ihn seine dem jeweiligen Zustand des Sammlers (13) entsprechende Endstellung einnehmen zu lassen.

2. Anordnung nach Anspruch 1,
dadurch gekennzeichnet, daß die Einrichtungen, die den Sammler (13) direkt oder indirekt seine jeweiligen Zustände einnehmen lassen, eine Steuereinheit (47) umfassen, daß die Einrichtung zum Erfassen eines Kupplungsvorgangs durch einen Sensor (48) gebildet ist, der mit der Steuereinheit (47) verbunden ist, und daß der druckmittelgesteuerte Zylinder (25) über ein Elektromagnetventil (30), das von der Steuereinheit (47) gesteuert ist, mit einer Druckmittelquelle (31) verbunden ist.

3. Anordnung nach Anspruch 1 oder 2,
dadurch gekennzeichnet, daß die Zufuhr von Druckmittel zu dem druckmittelgesteuerten Zylinder (25) durch eine Leitung (39) stattfindet, die eine Verengung (41) enthält, wenn der Sammler (13) in seinen ölgefüllten Zustand gebracht werden soll.

4. Anordnung nach Anspruch 3,
dadurch gekennzeichnet, daß eine Entnahme von Druckmittel aus dem druckmittelgesteuerten Zylinder (25) über eine Leitung (40) stattfindet, die ein Rückschlagventil (42) enthält, wenn der Sammler (13) in seinen entleerten Zustand gebracht werden soll, und daß die das Rückschlagventil (42) enthaltende Leitung (40) und die die Verengung (41) enthaltende Leitung (39) zueinander parallel in einer Leitung (38) zwischen dem Elektromagnetventil (30) und dem druckmittelgesteuerten Zylinder (25) angeordnet sind.

5. Anordnung nach einem der Ansprüche 1 bis 4,
dadurch gekennzeichnet, daß der druckmittelgesteuerte Zylinder die Gestalt eines Druckluftzylinders (25) hat und daß das Druckmittel Druckluft ist.

## Revendications

1. Agencement pour un embrayage dans une transmission d'un véhicule, dans lequel l'embrayage (1) est logé dans un carter d'embrayage (2) qui contient un carter d'huile (12) qui lui-même loge au moins partiellement l'embrayage (1), et dans lequel le carter d'huile (12) est raccordé à un accumulateur (13) qui possède la forme d'un cylindre (16) logeant un piston mobile (17) qui délimite, dans le cylindre (16), un espace (18) qui peut être dans un état rempli d'huile, dans lequel l'accumulateur (13) contient de l'huile, et qui peut être dans un état vide, dans lequel l'huile présente auparavant a été envoyée au carter d'huile (12), et dans lequel un dispositif (48) pour détecter un actionnement de l'embrayage est raccordé à des dispositifs (25,30,47), qui sont organisés directement ou indirectement pour amener l'accumulateur (13) à prendre son état vide pendant un actionnement de l'embrayage et son état rempli d'huile après l'actionnement de l'embrayage,
caractérisé en ce que
l'espace (18) dans l'accumulateur (13) communique directement avec le carter d'huile (12) du carter d'embrayage, par l'intermédiaire d'une canalisation hydraulique (22), au moyen de laquelle l'huile située dans le carter d'embrayage (2) peut être évacuée directement dans l'accumulateur (13) après un actionnement de l'embrayage, et de l'huile peut être transférée directement au carter d'embrayage (2) pendant le fonctionnement de l'embrayage, et en ce que le piston (17) de l'accumulateur (13) est raccordé à un vérin (25) commandé par un fluide sous pression et qui agit sur le piston (17) de l'accumulateur pour l'amener à prendre sa position d'extrémité correspondant à l'état respectif de l'accumulateur (13).

2. Agencement selon la revendication 1, caractérisé en ce que les dispositifs servant à amener directement ou indirectement l'accumulateur (13) à prendre ses états respectifs comprennent l'unité de commande (47), et en ce que le dispositif de détection du fonctionnement de l'embrayage possède la forme d'un capteur (48), qui est raccordé à l'unité de commande (47), et en ce que le vérin (25) commandé par le fluide sous pression est raccordé à une source de fluide sous pression (31) par l'intermédiaire d'une soupape électromagnétique (30) qui est commandée par l'unité de commande (47).

3. Agencement selon la revendication 1 ou 2, caractérisé en ce que l'envoi du fluide sous pression au vérin (25) commandé par le fluide sous pression s'effectue par l'intermédiaire d'une canalisation (39), qui contient un étranglement (41), lorsque l'accumulateur (13) doit être amené dans son état rempli d'huile.

4. Agencement selon la revendication 3, caractérisé en ce qu'un retrait du fluide sous pression à partir du vérin (25) commandé par le fluide sous pression s'effectue par l'intermédiaire d'une canalisation (40), qui contient une soupape antiretour (42), lorsque l'accumulateur (13) doit être amené dans son état vide, et en ce que la canalisation (40) contenant la soupape antiretour (42) et la canalisation (39) contenant l'étranglement (41) sont disposées réciproquement en parallèle dans une canalisation (38) entre la soupape électromagnétique (30) et le vérin (25) commandé par le fluide sous pression.

5. Agencement selon l'une quelconque des revendications 1-4, caractérisé en ce que le vérin commandé par le fluide sous pression possède la forme d'un vérin à air comprimé (25) et en ce que le fluide sous pression se présente sous la forme d'air comprimé.
